# EUROPEAN PATENT APPLICATION

(11) **EP 4 513 661 A1**
(43) Date of publication of application: **26.02.2025**
(21) Application number: 23215855.0
(22) Date of filing: 12.12.2023
(51) Int. Cl.: H01M 50/533, H01M 50/15

(54) **ELECTRODE LEAD-OUT MEMBER AND COVER ASSEMBLY**

(30) Priority: 24.08.2023 CN 202322293431 U
(71) Applicant: AESC Japan Ltd., Yokohama-Shi, Kanagawa 220-0012 (JP)
(72) Inventor: CHEN, Hu, Jiangyin City, Wuxi City, 214443 (CN); CAO, Xingyu, Jiangyin City, Wuxi City, 214443 (CN); ZHAO, Gongwei, Jiangyin City, Wuxi City, 21443 (CN)
(74) Representative: Becker, Eberhard

(57) **Abstract**

The disclosure provides an electrode lead-out member (140), a cover assembly (130), a secondary battery (100), and an electronic apparatus (10), and is related to the technical field of batteries. The electrode lead-out member (140) includes a connecting plate (141) and an electrode terminal (142). The connecting plate (141) includes a terminal connecting zone (1411), a tab connecting zone (1412), and a transitional connecting zone (1413) for connecting the terminal connecting zone (1411) and the tab connecting zone (1412). The electrode terminal (142) is connected to the terminal connecting zone (1411). The transitional connecting zone (1413) is provided with at least one first recess (1414), the first recess (1414) is recessed in a thickness direction of the connecting plate (141), and an inner contour of a sidewall of the first recess (1414) is located inside an outer contour of a sidewall of the connecting plate (141).

## Description

### BACKGROUND

### Technical Field

The disclosure relates to the field of batteries, and in particular, relates to an electrode lead-out member and a cover assembly.

### Description of Related Art

Batteries are used in a wide range of electronic apparatuses, such as mobile phones, notebook computers, battery vehicles, electric vehicles, electric airplanes, electric ships, electric toy cars, electric toy ships, electric toy airplanes, and electric tools. At present, common batteries include nickel-cadmium batteries, nickel-hydrogen batteries, lithium-ion batteries, and secondary alkaline zinc-manganese batteries. Among all these batteries, lithium-ion batteries have become the mainstream power batteries used in new energy vehicles due to their advantages such as high specific energy, high specific power, long service life, and low costs.

In order to improve the safety performance and installation efficiency of batteries, the conventional positive and negative electrode connecting sheets and ultrasonic welding protective sheets are eliminated from the welding of the winding cells and covers of the lithium-ion batteries. A winding cell is directly laser welded onto the electrode bottom plate through the tab, so the electrode bottom plate needs to be enlarged. However, enlarging the electrode bottom plate will make the electrode heavier, especially on the negative side. The electrode bottom plate on the negative side is mostly made of copper. Copper has higher density and heavier weight, which leads to a decrease in the mass density of the battery and affects the electrical performance of the battery. Therefore, there is a need to provide an electrode lead-out member and a cover assembly to solve the above problems.

### SUMMARY

In view of the abovementioned shortcomings found in the related art, the disclosure provides an electrode lead-out member and a cover assembly, so as to address the problem of reduced battery mass density caused by the heavy weight of the electrode bottom plate.

To achieve the above and other related purposes, the disclosure provides an electrode lead-out member including a connecting plate and an electrode terminal. The connecting plate includes a terminal connecting zone, a tab connecting zone, and a transitional connecting zone for connecting the terminal connecting zone and the tab connecting zone. The electrode terminal is connected to the terminal connecting zone. Herein, the transitional connecting zone is provided with at least one first recess, the at least one first recess is recessed in a thickness direction of the connecting plate, and an inner contour of a sidewall of the at least one first recess is located inside an outer contour of a sidewall of the connecting plate.

In the electrode lead-out member provided by an embodiment of the disclosure, a projection of the at least one first recess along the thickness direction is located outside the tab connecting zone.

In the electrode lead-out member provided by an embodiment of the disclosure, the at least one first recess is recessed in a first direction, and the first direction points from one side of the connecting plate to which the electrode terminal is connected towards the other side of the connecting plate.

In the electrode lead-out member provided by an embodiment of the disclosure, a position of the connecting plate extending in a second direction is provided with a second recess, and the second direction points from the terminal connecting zone towards the tab connecting zone. The second recess is recessed in the thickness direction of the connecting plate, and a fuse portion is formed between the second recess and the at least one first recess.

In the electrode lead-out member provided by an embodiment of the disclosure, each transitional connecting zone on a side of the terminal connecting zone is provided with the at least one first recess. The second recess is arranged at a position of the connecting plate away from the terminal connecting zone between the at least one first recess on both sides. The at least one first recess has a polygonal prism structure, and the second recess has a polygonal prism structure. A side of the second recess away from the terminal connecting zone penetrates through a side of the connecting plate, and the fuse portion is formed between corner vertex of the at least one first recess and the second recess.

In the electrode lead-out member provided by an embodiment of the disclosure, the at least one first recess is a through hole penetrating in the thickness direction of the connecting plate, and the second recess is a through hole penetrating in the thickness direction of the connecting plate. A length of the fuse portion is C, a minimum distance between an outer contour of the at least one first recess and an outer contour of the connecting plate is D, and a width of the connecting plate where the tab connecting zone is located is A, then C+D < A.

In the electrode lead-out member provided by an embodiment of the disclosure, the second recess is a through hole penetrating in the thickness direction of the connecting plate.

In the electrode lead-out member provided by an embodiment of the disclosure, the material of the electrode terminal is a metal containing aluminum, the material of the connecting plate is a metal containing copper, and the electrode terminal and the terminal connecting zone are connected by friction welding.

The disclosure further provides a cover assembly including a cover body, a lower insulating member, and the abovementioned electrode lead-out member provided by the disclosure. The lower insulating member is arranged on a side of the cover body. The electrode terminal of the electrode lead-out member penetrates through the lower insulating member and is at least partially arranged in the through hole. At least part of the connecting plate of the electrode lead-out member abuts against a side of the lower insulating member away from the cover body.

In the cover assembly provided by an embodiment of the disclosure, a protrusion matched with the at least one first recess of the electrode lead-out member is provided on a side of the lower insulating member facing the connecting plate, and the protrusion is embedded and matched with the at least one first recess.

In the cover assembly provided by an embodiment of the disclosure, each terminal connecting zone on a side of the transitional connecting zone is provided with the at least one first recess.

In the cover assembly provided by an embodiment of the disclosure, the protrusion is a groove on a side facing the cover body.

In the cover assembly provided by an embodiment of the disclosure, the protrusion includes a bottom portion and a side portion. The side portion is connected to the lower insulating member and extends in a direction away from the cover body, the bottom portion is connected to a side of the side portion away from the cover body. The bottom portion and/or the side portion is provided with a liquid-guiding hole.

In the cover assembly provided by an embodiment of the disclosure, the cover assembly includes a first electrode lead-out member and a second electrode lead-out member. A first recess of a connecting plate of the first electrode lead-out member and a first recess of a connecting plate of the second electrode lead-out member are not interchangeable.

In the cover assembly provided by an embodiment of the disclosure, the first recess of the first electrode lead-out member is arranged at a first position of the connecting plate. The first recess of the second electrode lead-out member is arranged at a second position of the connecting plate. The first position and the second position are located at different positions of the transitional connecting zones.

In the disclosure, the electrode lead-out member is provided with the first recess recessed in the thickness direction on the side of the connecting plate away from the tab connecting zone, so that the thickness of the connecting plate in this zone is reduced. The arrangement of the first recess not only reduces the weight of the connecting plate, but also allows the lower insulating member in the cover assembly to be matched. In this way, positioning is achieved, and the lower insulating member is prevented from being dislocated and affecting the assembly. The arrangement of the second recess recessed in the thickness direction on the connecting plate further reduces the weight of the connecting plate. Further, the fuse portion is formed between the second recess and the first recess, so that overcurrent protection of the connecting plate is achieved.

In the disclosure, the protrusion matched with the first recess is arranged on the lower insulating member of the cover assembly, and since the protrusion and the first recess are embedded and matched with each other, the lower insulating member is prevented from being dislocated and affecting the assembly. Further, configuring the side of the protrusion away from the connecting plate into a cavity-shaped groove reduces the weight of the lower insulating member. The arrangement of the liquid-guiding hole allows the electrolyte flowing into the groove during liquid injection to be quickly guided out.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without inventive effort.
FIG. 1 is a schematic view of an overall structure of an electrode lead-out member according to an embodiment of the disclosure.
FIG. 2 is a schematic view of a structure of a connecting plate of the electrode lead-out member according to an embodiment of the disclosure.
FIG. 3 is a schematic view of the structure of the electrode lead-out member viewed from another angle according to an embodiment of the disclosure.
FIG. 4 is a schematic view of the structure of the connecting plate of the electrode lead-out member according to an embodiment of the disclosure.
FIG. 5 is a schematic view of the structure of the connecting plate of the electrode lead-out member according to another embodiment of the disclosure.
FIG. 6 is a schematic view of a structure of a cover assembly according to an embodiment of the disclosure.
FIG. 7 is a schematic exploded view of the cover assembly according to an embodiment of the disclosure.
FIG. 8 is a schematic view of a structure of a lower insulating member of the cover assembly according to an embodiment of the disclosure.
FIG. 9 is a schematic view of the cover assembly viewed from another angle according to an embodiment of the disclosure.
FIG. 10 is a cross-sectional view of FIG. 9 taken along A-A.
FIG. 11 is a schematic view of a structure of a secondary battery according to an embodiment of the disclosure.
FIG. 12 is a schematic view of a structure of an electronic apparatus according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

The drawings provided in the embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex. It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

In the following description, numerous details are discussed to provide a more thorough explanation of embodiments of the disclosure. However, it will be apparent for a person having ordinary skill in the art that embodiments of the disclosure may be practiced without these specific details. In other embodiments, well-known structures and apparatuses are shown in block diagram form rather than in detail in order to avoid obscuring the embodiments of the disclosure.

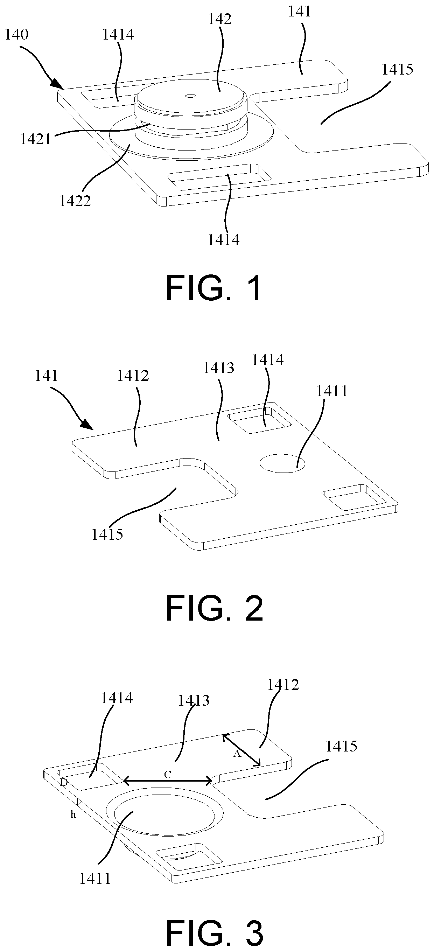

With reference to FIG. 1 to FIG. 12, the disclosure provides an electrode lead-out member 140, a cover assembly 130, a secondary battery 100, and an electronic apparatus 10. Herein, a connecting plate of the electrode lead-out member 140 is provided with a recess in a thickness direction, and the arrangement of the recess allows a weight of the connecting plate to be reduced and mass energy density of a battery to be improved.

In the disclosure, the secondary battery 100 may be a lithium ion secondary battery, a sodium ion secondary battery, a lithium iron phosphate secondary battery, or the like, which is not limited by the disclosure. The secondary battery 100 may be in the shape of a cylinder, a cuboid, a prism, or other shapes, which is also not limited by the disclosure. The secondary battery 100 includes a casing 110, an electrode assembly 120, the cover assembly 130, and the electrode assembly 120 is received in the casing 110. The electrode assembly 120 includes a body portion and a tab connected to the body portion. The cover assembly 130 includes a cover body 131, a lower insulating member 132, and the electrode lead-out member 140, and the lower insulating member 132 is arranged on a side of the cover body 131 facing the electrode assembly 120. The electrode lead-out member 140 penetrates through the lower insulating member 132, is sealed and insulated with the cover body 131, and is electrically connected to the tab of the electrode assembly 120 to lead out a current of the electrode assembly 120. The cover body 131 is sealed with and covers an opening of the casing 110 to form a closed battery environment with the casing 110 to prevent liquid or other foreign matters from affecting the normal operation of the battery.

With reference to FIG. 1, the electrode lead-out member 140 provided by the disclosure includes a connecting plate 141 and an electrode terminal 142. The electrode terminal 142 protrudes from a surface of the connecting plate 141 and forms an integral structure together with the connecting plate 141. The connecting plate 141 is connected to the tab of the electrode assembly 120, thereby guiding the current of the electrode assembly 120 to the electrode terminal 142. In the disclosure, an original connecting piece structure is omitted, and the connecting plate 141 and the electrode terminal 142 are provided as an integrated structure. In this way, a contact area between the electrode lead-out member 140 and the tab is increased, and the safety performance of the battery is improved. Further, a welding process between the electrode terminal and the connecting piece is omitted, so that the efficiency of battery production is improved.

With reference to FIG. 1 and FIG. 2, in some embodiments, the connecting plate 141 has a flat structure and is made of a conductive material, such as copper or aluminum. The connecting plate 141 includes a terminal connecting zone 1411, a tab connecting zone 1412, and a transitional connecting zone 1413 for connecting the terminal connecting zone 1411 and the tab connecting zone 1412. The terminal connecting zone 1411 is configured to be connected to the electrode terminal 142, and the tab connecting zone 1412 is configured to be connected to the tab of the electrode assembly 120. The electrode terminal 142 is arranged on the terminal connecting zone 1411, and the electrode terminal 142 and the connecting plate 141 may be an integrally formed structure or may be two independent components fixedly connected as a whole through welding, such as friction welding. Further, the terminal connecting zone 1411 is higher than the transitional connecting zone 1413 in the thickness direction of the connection plate 141. That is, an annular boss 1422 is arranged in the terminal connecting zone 1411, and the electrode terminal 142 is arranged on the annular boss 1422, so flatness of a connecting surface and reliability of welding are ensured in this way. The electrode terminal 142 is a solid structure made of a conductive material to ensure a flow area of the electrode terminal 142 and ensure stability of current transmission. The electrode terminal 142 may be may be configured in a columnar structure to facilitate connection with an external electronic apparatus or a charging apparatus. An end surface of the electrode terminal 142 facing away from the connecting plate 141 is recessed to form the recess for connecting to an electrical apparatus or a charging apparatus. An inner wall of the recess may be provided with threads to improve the convenience of connection. The electrode terminal 142 and the connecting plate 141 may be made of a metal material with certain strength. Further, the electrode terminal 142 is made of metal containing aluminum, such as aluminum alloy. The connecting plate 141 is made of copper containing metal, such as copper. When the electrode lead-out member 140 is a negative electrode lead-out member, the electrode terminal 142 and the connecting plate 141 are made of different materials, for example, the electrode terminal 142 is made of aluminum alloy and the connecting plate 141 is made of copper. When the electrode lead-out member 140 is a positive electrode lead-out member, the electrode terminal 142 and the connecting plate 141 are made of the same material, such as aluminum alloy.

With reference to FIG. 1 and FIG. 2, the tab of the electrode assembly 120 is directly welded onto the connecting plate 141 of the electrode lead-out member 140. In order to ensure the reliability of welding, the connecting plate 141 needs to be enlarged. However, enlarging the connecting plate 141 increases its weight, especially when the connecting plate 141 is made of copper, the weight is greater. To solve this problem, in the disclosure, the transitional connecting zone 1413 of the connecting plate 141 is provided with at least one first recess 1414, the first recess 1414 is recessed in the thickness direction of the connecting plate 141, and an inner contour of a sidewall thereof is located inside an outer contour of a sidewall of the connecting plate 141. To ensure the reliability of welding between the electrode lead-out member 140 and the tab, the first recess 1414 is arranged in an outer zone of the tab connecting zone 1412. That is, a projection of the first recess 1414 along the thickness direction of the connecting plate 141 is located outside the tab connecting zone 1412. In the disclosure, the first recess 1414 may be formed by a side of the connecting plate 141 connected to the electrode terminal 142 being recessed towards the other side of the connecting plate 141 (first direction), may be formed by the other side of the connecting plate 141 being recessed towards the side connected to the electrode terminal 142 (opposite to the first direction), and may also be formed by being recessed from a middle portion of the connecting plate 141 towards both sides. A direction in which the first recess 1414 is recessed is not limited herein. Preferably, the first recess 1414 points from the side of the connecting plate 141 to which the electrode terminal 142 is connected towards the other side of the connecting plate 141. The arrangement of the first recess 1413 allows the connecting plate 141 to be thinned at this position, so that the weight of the connecting plate 141 is reduced.

With reference to FIG. 2, the first recess 1414 may be a through hole that penetrates through the connecting plate 141 in the thickness direction, or may be a groove that does not penetrate through the connecting plate 141 in the thickness direction. Preferably, the first recess 1414 is a through hole penetrating in the thickness direction of the connecting plate 141, so that the weight of the connecting plate 141 may be reduced to the greatest extent. More preferably, first recesses 1414 are provided on both sides of the terminal connecting zone 1411, and the weight of the connecting plate 141 may be further reduced in this way.

With reference to FIG. 2 and FIG. 3, a relationship between a size of the first recess 1414 and a size of the connecting plate 141 may be selected according to specific circumstances. In some embodiments, a thickness of the connecting plate is denoted as h, a minimum distance between the inner contour of the sidewall of the first recess 1414 and the outer contour of the sidewall of the connecting plate 141 is denoted as D, and the sizes of the two satisfy the following relationship: 0.5h≤D≤1.5h, further, 0.8h≤D≤1.2h. A value of D may range as 0≤D≤10mm, and further, 3≤D≤7 mm, for example, 5 mm, etc., so that the safety and reliability of the battery is ensured.

With reference to FIG. 1 to FIG. 3, in some embodiments, the connecting plate 141 is further provided with a second recess 1415 recessed in the thickness direction. Similarly, the second recess 1415 may be a through hole that penetrates through in the thickness direction of the connecting plate 141, or may be a groove that does not penetrate through the connecting plate 141. Preferably, it is a through hole. The second recess 1415 is provided at a position where the connecting plate 141 extends in the second direction. Herein, the second direction points from the terminal connecting zone 1411 towards the tab connecting zone 1412, and a side of the second recess 1415 away from the terminal connecting zone 1411 and an edge of the connecting plate 141 away from the terminal connecting zone 1411 penetrate through each other. That is, the second recess 1415 is formed by an indentation of the edge of the connecting plate 141 away from the terminal connecting zone 1411. A tab connecting zone 1415 is formed between two side edges of the second recess 1415 and the edge of the connecting plate 141. The arrangement of the second recess 1415 further reduces the weight of the connecting plate 141 and improves the mass energy density of the battery.

Further, a connecting plate zone between the second recess 1415 and the first recess 1414 forms a fuse portion. To be specific, each transitional connecting zone 1413 on a side of the terminal connecting zone 1411 is provided with the first recess 1414, and the second recess 1415 is arranged at a position of the connecting plate 141 away from the terminal connecting zone 1411 between the first recesses 1411 on both sides. The zone of the connecting plate 141 on both sides of the second recess 1415 is the tab connecting zone 1412. The first recess 1414 has a polygonal prism structure, such as a square structure, and the second recess 1415 has a polygonal prism structure, such as a U-shaped structure. An opening end of the U-shape faces the edge of the connecting plate 141, and the fuse portion is formed between corner vertices of the first recess 1414 and the second recess 1415.

With reference to FIG. 3 to FIG. 5, in an embodiment, both the first recess 1414 and the second recess 1415 are through-hole structures penetrating in the thickness direction of the connecting plate 141. Herein, a length of the fuse portion is denoted as C, the minimum distance between the outer contour of the first recess 1414 and the outer contour of the connecting plate 141 is denoted as D, a width (a width between the outer contour of the sidewall of the connecting plate 141 and an inner contour of a sidewall of the second recess 1414) of the connecting plate 141 where the tab connecting zone 1412 is located is denoted as A, and C+D<A. In the event of a short circuit, after the current increases and the heat rises, and the connecting plate 141 fuses at the fuse portion, causing the battery to be disconnected. In this way, the battery is prevented from catching fire and exploding due to short circuit, and overcurrent protection of the connecting plate 141 is achieved. In other embodiments, the first recess 1414 and the second recess 1415 may also be grooves that do not penetrate the connecting plate 141. In this case, a cross-sectional area of the fuse portion needs to satisfy the overcurrent protection of the connecting plate 141.

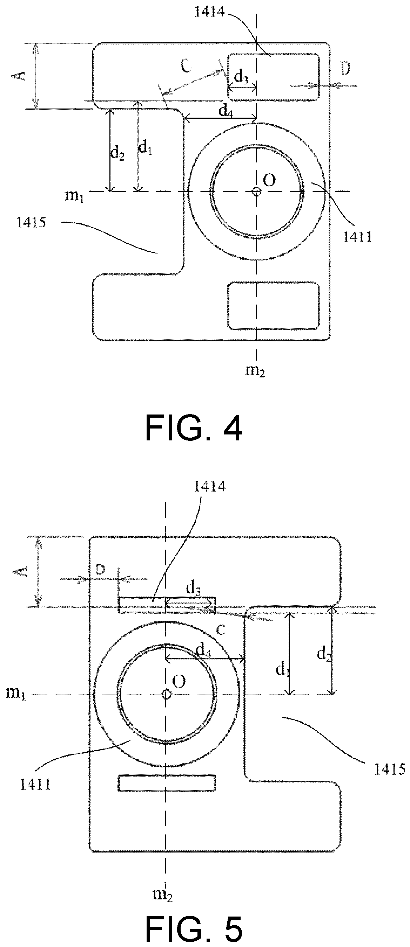

With reference to FIG. 4 and FIG. 5, in an embodiment, a bottom portion of the first recess 1414 is higher than a top portion of the second recess 1415. To be specific, a center position of the terminal connecting zone 1411 is denoted as an origin O, a center line passing through the origin O and extending in a length direction of the connecting plate 141 is denoted as m₁, and a center line passing through the origin O and extending in a width direction of the connecting plate 141 is denoted as m₂. A minimum distance from the bottom portion of the first recess 1414 to the center line m₁ is denoted as d₁, a minimum distance from the a side portion of the first recess 1414 to the center line m₂ is denoted as d₃, a minimum distance from the top portion of the second recess 1415 to the center line m₁ is denoted as d₂, a minimum distance from the a side portion of the second recess 1415 to the center line m₂ is denoted as d₄, then d₁ is greater than d₂, and d₃ is less than d₄ (with reference to FIG. 4). In another embodiment, the bottom portion of the first recess 1414 may also be lower than the top portion of the second recess 1415, but the length C of the fuse portion must be equal to the minimum distance D between the outer contour of the first recess 1414 and the outer contour of the connecting plate 141, that is d₁ < d₂, d₃ < d₄, and C=D (with reference to FIG. 5).

With reference to FIG. 1 to FIG. 5, in the electrode lead-out member 140 provided by the disclosure, by arranging the first recess 1414 on the connecting plate 141, the weight of the connecting plate 141 is reduced, and the mass energy density of the battery is improved. The second recess 1415 is arranged on the connecting plate 141, so that the weight of the connecting plate 141 is further reduced. Further, the fuse portion is formed between the second recess 1415 and the first recess 1414. In this way, when the battery is short-circuited, the connecting plate 141 is fused at the fuse portion, causing the battery to be disconnected. This prevents the battery from catching fire and exploding due to short circuit and achieves over-current protection for the connecting plate 141.

With reference to FIG. 1 to FIG. 6, the cover assembly 130 provided by the disclosure includes a cover body 131, a lower insulating member 132, and the abovementioned electrode lead-out member 140. The lower insulating member 132 is arranged on the side of the cover body 131 facing the electrode assembly 120, so as to isolate the cover body 131 from the electrode assembly 120 to electrically insulate the two. The cover body 141 is provided with a through hole, and the electrode terminal 142 of the electrode lead-out member 140 penetrates through the lower insulating member 132 and is at least partially arranged in the through hole on the cover body 131. At least part of the connecting plate 141 of the electrode lead-out member 140 abuts against a side of the lower insulating member 132 away from the cover body 131.

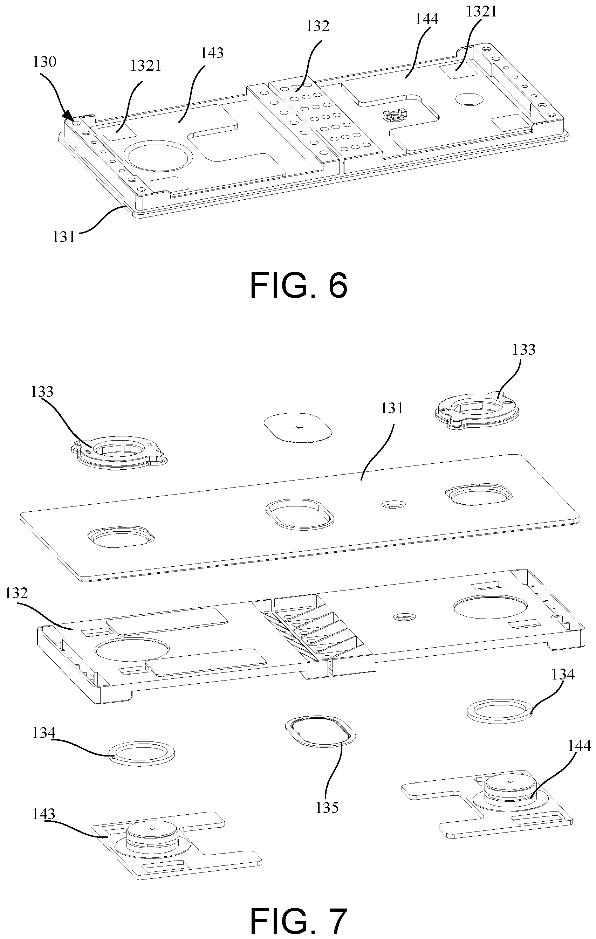

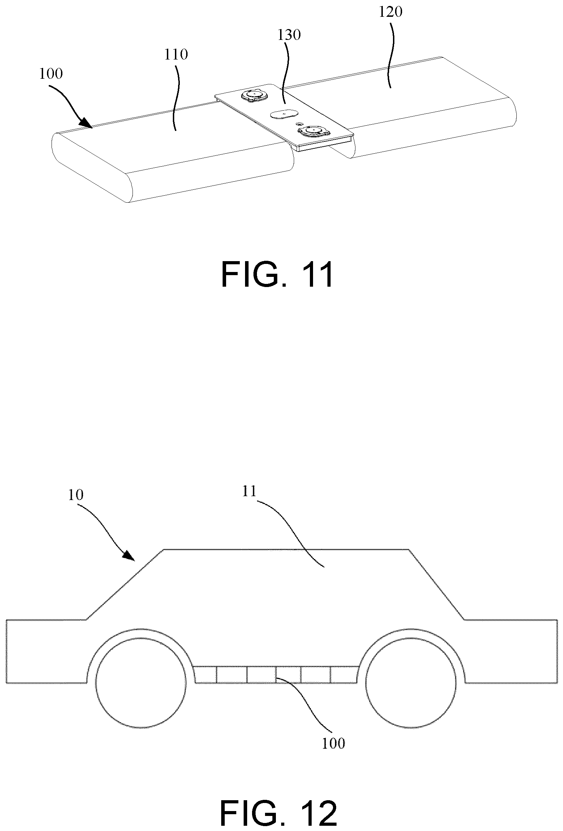

With reference to FIG. 7 and FIG. 11, in some embodiments, a shape of the cover body 131 is adapted to a shape of the casing 110. For instance, if the casing 110 is a square casing, the cover body 131 has a matching square flat plate structure. When the casing 110 has other shapes, the shape of the cover body 131 may also be correspondingly other shapes that are adapted to the casing 110. Optionally, the cover body 131 may be made of a material with certain hardness and strength, such as copper, iron, aluminum, stainless steel, aluminum alloy, etc. In this way, the cover body 131 is less likely to be deformed when subjected to extrusion and collision, so that the battery can have higher structural strength and the safety performance may also be improved.

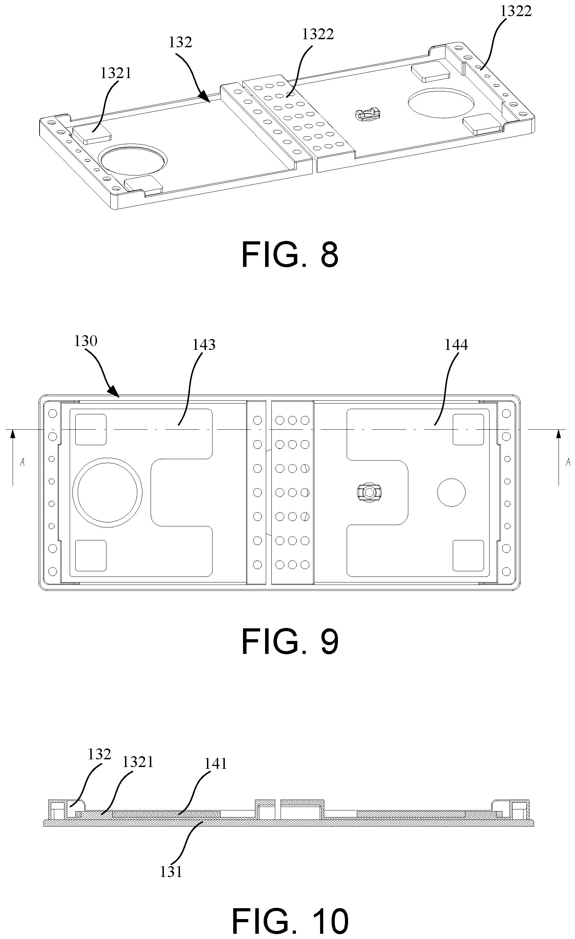

With reference to FIG. 7 and FIG. 8, a shape of the lower insulating member 132 is consistent with the shape of the cover body 131. The lower insulating member 132 may have an integrated structure or a split structure assembled from various components. Since the cover body 131 is usually made of a metal material with certain hardness and strength, if the cover body 131 is in direct contact with the electrode assembly 120, it may directly cause a short circuit in the electrode assembly 120. Therefore, arranging the lower insulating member 132 between the cover body 131 and the electrode assembly 120 may insulate the cover body 131 and the electrode assembly 120. The material of the lower insulating member 132 is generally insulating plastic.

With reference to FIG. 2, FIG. 7, and FIG. 10, since there is no limiting device between the lower insulating member 132 and the cover body 131, the lower insulating member 132 may be easily dislocated and detached from the cover body 131 during the assembly process of the cover assembly 130. Assembly accuracy and assembly efficiency are thus affected. In the disclosure, a protrusion 1321 matched with the first recess 1414 is arranged on a side of the lower insulating member 132 facing the connecting plate 141 of the electrode lead-out member 140. The protrusion 1321 is embedded and matched with the first recess 1414 on the connecting plate 141 to position the lower insulating member 132 and to prevent deviation. A shape of the protrusion 1321 is not limited herein, as long as the shape is matched with the shape of the first recess 1414. For instance, if the first recess 1414 is of a square structure, the protrusion 1321 is a matching square protrusion, and if the first recess 1414 is of another structure, the protrusion 1321 is of another matching structure. It should be noted that a size of the protrusion 1321 must achieve the positioning of the lower insulating member 132 without affecting the matching relationship among the components of the cover assembly 130. Therefore, the size of the protrusion 1321 needs to satisfy the following relationship. A height of the protrusion 1321 is denoted as h₁, a depth of the first recess 1414 is denoted as h₂, and a gap between the transitional connecting zone 1413 and the lower insulating member 132 is denoted as h₃, then h₁≤ h₂+ h₃, where h₃ is the gap generated during the actual assembly process, and preferably, h₃=0.

With reference to FIG. 2 and FIG. 8, further, in order to achieve a better weight reduction effect of the connecting plate 141 and a better positioning effect of the lower insulating member 132, the connecting plate 141 is usually provided with two or more first recesses 1414. Correspondingly, a plurality of protrusions 1321 are arranged on the lower insulating member 132. In order to prevent the protrusion 1321 and the first recess 1414 from being stuck, the protrusion 1321 and the first recess 1414 are provided with a clearance fit. That is, a certain gap d is provided between the outer contour of the protrusion 1321 and the inner wall of the first recess 1414. A minimum value of d is 0.1 mm, and a maximum value shall be such that a movement zone of the lower insulating member 132 does not exceed a coverage area of the cover body 131. Such a gap arrangement may prevent the protrusion 1321 from being stuck with the first recess 1413 during the assembly process, and may also limit the range of movement of the lower insulating member 132 to prevent it from being detached from the cover body 131.

With reference to FIG. 7 and FIG. 8, preferably, the protrusion 1321 is provided as a groove on one side facing the cover body 131. That is, the protrusion 1321 includes a bottom portion and a side portion, the side portion is connected to the lower insulating member 132 and extends in a direction away from the cover body 131, and the bottom portion is connected to a side of the side portion away from the cover body 131. The arrangement of the groove-shaped protrusion 1321 may reduce the weight of the lower insulating member 132. The protrusion 1321 may be injection molded integrally with the lower insulating member 132 or may be processed after the lower insulating member 132 is formed. Further, in order to prevent part of an electrolyte from being stored in the groove of the protrusion 1321 when the battery is filled with liquid, a liquid-guiding hole is provided on the protrusion 1321 to allow the electrolyte in the groove to flow out from the liquid-guiding hole. The liquid-guiding hole may be provided on the bottom portion of the protrusion, on the side portion, or on both the bottom portion and the side portion.

With reference to FIG. 7, FIG. 8, and FIG. 11, the lower insulating member 132 not only insulates the electrode assembly 120 and the cover body 131, but also supports the electrode assembly 120. After the electrode assembly is assembled into the casing and the cover assembly 130 is welded, the internal winding cell of the electrode assembly 120 is in a slightly compressed state. Moreover, during the process of entrucking and using, it may also be in a vibrating environment, so if the electrode assembly 120 is not restrained enough, the service life of the winding cell may be easily affected or a short circuit may occur. Therefore, the structural design of the lower insulating member 132 is also required to ensure that the electrode assembly 120 is effectively supported and does not move up and down. As an example, a supporting portion 1322 is provided on the side of the lower insulating member 132 away from the cover body 131 to resist the electrode assembly 120. In this way, the support strength of the lower insulating member 131 may be improved, the up and down movement of the electrode assembly 120 may be restricted, and the tab may be prevented from being pulled up and down and torn. The supporting portion 1322 is a structure protruding from a surface of the lower insulating member 132 and may be a cylinder, a prism, a hexahedron, or other structures. The support portion 1322 may be provided at both ends of the lower insulating member 132, or may be provided in a middle portion of the lower insulating member 132. Preferably, supporting portions 1322 are provided at both ends and the middle portion of the lower insulating member 132.

With reference to FIG. 1 and FIG. 7, the cover assembly 100 further includes upper insulating members 133 and sealing members 134. The upper insulating members 133 and the sealing members 134 separate and insulate the electrode terminal 142 of the electrode lead-out member 140 from the cover body 131. The upper insulating members 133 and the sealing members 134 may be made of rubber or other insulating materials. To be specific, each upper insulating member 133 is sleeved on a portion where the electrode terminal 142 protrudes from the cover body 131 and is fixed on the side of the cover body 131 away from the lower insulating member 132. Preferably, each upper insulating member 133 is engaged with the electrode terminal 142 around a circumferential direction of the electrode terminal 142. For instance, an annular groove 1421 is provided on a top periphery of the electrode terminal 142 extending out of the cover body 131, and a radially protruding positioning ring is provided on an inner wall of each upper insulating member 133. When each upper insulating member 133 is installed, the positioning ring is embedded in the annular groove 1421, so that the positioning of the upper insulating member 133 and the electrode lead-out member 140 is implemented. Each sealing member 134 is installed at a position of the electrode terminal 142 close to the connecting plate 141. For instance, the annular boss 1422 protruding from the electrode terminal 142 is provided at the connection between the electrode terminal 142 and the connecting plate 141, and each sealing member 134 is sleeved on the annular boss 1422.

With reference to FIG. 7, in an embodiment, the cover assembly 130 includes two electrode lead-out members with opposite polarities, which are denoted as a first electrode lead-out member 143 and a second electrode lead-out member 144. The first electrode lead-out member 143 is connected to a positive electrode tab of the electrode assembly 120, and the second electrode lead-out member 144 is connected to a negative electrode tab of the electrode assembly 120. The first electrode lead-out member 143 and the second electrode assembly 144 may be arranged at the same end of the battery, or they may be arranged at different ends, which is specifically determined by the tabs of the electrode assembly 120. If the positive electrode tab and the negative electrode tab are distributed at the same end of the electrode assembly 120, the first electrode lead-out member 143 and the second electrode lead-out member 144 are located at the same end of the battery. If the positive electrode tab and the negative electrode tab are distributed at different ends of the electrode assembly, the first electrode lead-out member 143 and the second electrode lead-out member 144 are located at different ends of the battery, corresponding to the positive electrode tab and the negative electrode tab. In the disclosure, the positive electrode tab and the negative electrode tab are distributed at the same end of the electrode assembly 120, and therefore, the first electrode lead-out member 143 and the second electrode lead-out member 144 are located at the same end of the battery.

With reference to FIG. 7, to be specific, both ends of the cover body 131 are provided with first through holes for the electrode terminals of the first electrode lead-out member 143 and the second electrode lead-out member 144 to pass through. Both ends of the lower insulating member 132 are provided with second through holes for the electrode terminals 142 of the first electrode lead-out member 143 and the second electrode lead-out member 144 to pass through. The electrode terminals 142 of the first electrode lead-out member 143 and the second electrode lead-out member 144 pass through the second through hole and the first through hole in sequence and are sealed, insulated, and fixed by the upper insulating members 133 on the cover body 131. The connecting plates of the first electrode lead-out member 143 and the second electrode lead-out member 144 abut against the side of the lower insulating member 132 away from the cover body 131. The lower insulating member 132 is provided with protrusions 1321 at positions corresponding to the connection plates of the first electrode lead-out member 143 and the second electrode lead-out member 144, so that improved positioning effect is provided.

With reference to FIG. 2 and FIG. 7, in order to prevent the first electrode lead-out member 143 and the second electrode lead-out member 144 from being connected reversely, in an embodiment, the first recesses 1414 on the connecting plates 141 of the two electrode lead-out members are configured to be non-interchangeable. That is, the positions or shapes of the first recesses 1411 on the connecting plates 141 connected to the first electrode lead-out member 143 and the second electrode lead-out member 144 are different, and the first electrode lead-out member 143 and the second electrode lead-out member 144 may be distinguished by their shapes or positions. To be specific, the first recess 1414 of the first electrode lead-out member 143 has a first shape, the first recess 1414 of the second electrode lead-out member 144 has a second shape, and the first shape is configured to be different from the second shape. For instance, the first shape is a square hole and the second shape is a long hole, or the first shape is a through hole and the second shape is a groove. Alternatively, the first recess 1414 of the first electrode lead-out member 143 is arranged at a first position of the connecting plate 141, and the first recess 1414 of the second electrode lead-out member 144 is arranged at a second position of the connecting plate 141, and the first position and the second position are located at different positions of the transitional connecting zones 1413, and so on, which is not limited herein, as long as the polarities of the two electrodes may be distinguished.

With reference to FIG. 7 and FIG. 11, the cover assembly 130 further includes a pressure relief mechanism 135 for releasing an internal pressure or a temperature of the secondary battery 100 when the internal pressure or the temperature of the secondary battery 100 reaches a predetermined value. Exemplarily, the pressure relief mechanism 135 is located between the first electrode lead-out member 143 and the second electrode lead-out member 144. The pressure relief mechanism 135 may be a component such as an explosion-proof valve, an explosion-proof disk, an air valve, a pressure relief valve, or a safety valve.

With reference to FIG. 11, the casing 110 of the secondary battery 100 provided by the disclosure includes an end wall and a sidewall arranged along a circumference of the end wall, and a stable sealing and electrical connection relationship is formed between the end wall and the sidewall. The connection between the end wall and the sidewall may be achieved in a variety of ways, such as one-piece stamping, one-piece casting, or split welding. The sidewall may be formed in a square shape around the end wall or along any other closed loop contour that can fit the end wall. In this embodiment, the end wall is rectangular, and the sidewall is arranged circumferentially along four sides of the end wall, and a square opening is formed on one end of the sidewall away from the end wall. A receiving cavity is formed in the casing 110 surrounded by the end wall and the sidewall, for accommodating the electrode assembly 120, the electrolyte (not shown), and other necessary components of the battery. To be specific, a size of the casing 110 may be determined according to a specific size of the electrode assembly 120. The casing 110 can be made of various materials, such as copper, iron, aluminum, steel, aluminum alloy, etc. In order to prevent the casing 110 from rusting during long-term use, a surface of the casing 110 may also be plated with a layer of anti-rust material such as metal nickel.

With reference to FIG. 11, the electrode assembly 120 is received in the casing 110, and the electrode assembly 120 is a component in the secondary battery 100 where electrochemical reactions occur. One or a plurality of electrode assemblies 120 may be included within the casing 110. The electrode assembly 120 includes the body portion and the tab connected to the body portion. The electrode assembly 120 is mainly formed by winding or laminating a positive electrode sheet and a negative electrode sheet, and a separator is usually provided between the positive electrode sheet and the negative electrode sheet. The positive electrode sheet includes a positive electrode current collector and a positive electrode active material, and the positive electrode active material is coated on a surface of the positive electrode current collector. The positive electrode current collector includes a coated zone coated with an active material and an uncoated zone uncoated with an active material, and the uncoated zone is rolled to form the positive electrode tab of the electrode assembly. The negative electrode sheet includes a negative electrode current collector and a negative electrode active material, and the negative electrode active material is coated on a surface of the negative electrode current collector. The negative electrode current collector includes a coated zone coated with an active material and an uncoated zone uncoated with an active material, and the uncoated zone is rolled to form the negative electrode tab of the electrode assembly. Taking a lithium-ion secondary battery as an example, a material of the positive electrode current collector may be aluminum. A positive active material layer includes a positive active material, and the positive active material may be lithium cobalt oxide, lithium iron phosphate, ternary lithium, or lithium manganate. A material of the negative electrode current collector may be copper. A negative active material layer includes a negative active material, and the negative active material may be carbon or silicon. A material of the separator may be polypropylene (PP) or polyethylene (PE), etc. In order to protect and insulate a cell, the electrode assembly 120 may also be covered with an insulating film, and the insulating film may be made of PP, PE, PET, PVC, or other polymer materials. In the disclosure, the electrode assembly 120 includes a first tab and a second tab facing the opening of the casing, and the first tab and the second tab have opposite electrical properties, that is, one is a positive tab and the other is a negative tab. The cover assembly 130 seals and blocks the opening of the casing 110, and the first electrode lead-out member 143 and the second electrode lead-out member 144 are welded and connected to the first tab and the second tab respectively.

With reference to FIG. 12, the disclosure further provides an electronic apparatus 10. The electronic apparatus 10 includes a working portion 11 and a battery group. The working portion 11 is electrically connected to the battery group to obtain electrical energy support. The battery group includes a box and a plurality of secondary batteries 100 provided by the disclosure. The plurality of secondary batteries 100 are placed in the box and are connected in series, in parallel, or in a mixed manner of series and parallel. It should be noted that in addition to the secondary battery 100 provided by the disclosure, the battery group may also include a battery group thermal management system, a circuit board, and other parts, which will not be described one by one herein.

As an example, the electronic apparatus 10 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery group is arranged at the bottom of the vehicle body and provides electrical energy support for the driving of the vehicle or the operation of electrical components in the vehicle.

In other embodiments, the electronic apparatus may be a mobile phone, a portable device, a notebook computer, a ship, a spacecraft, an electric toy, an electric tool, etc. The spacecraft includes an airplane, a rocket, a space shuttle, a spaceship, etc. The working portion may be a unit component that can obtain the electric energy of the battery group and perform corresponding work, such as a blade rotating unit of a fan, a dust collection working unit of a vacuum cleaner, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus is not particularly limited in the embodiments of the disclosure.

In the disclosure, the electrode lead-out member is provided with the first recess recessed in the thickness direction on the connecting plate, so that the thickness of the connecting plate in this zone is reduced. The arrangement of the first recess may not only reduce the weight of the connecting plate, but may also allow the protrusion provided on the lower insulating member of the cover assembly to be matched. In this way, positioning is achieved, and the lower insulating member is prevented from being dislocated and affecting the assembly. The arrangement of the second recess recessed in the thickness direction on the connecting plate may further reduce the weight of the connecting plate. Further, the fuse portion is formed between the second recess and the first recess, so that overcurrent protection of the connecting plate is achieved. The protrusion on the lower insulating member of the cover assembly is set into a cavity structure, which may reduce the weight of the lower insulating member. The liquid-guiding hole is provided on the protrusion to prevent electrolyte from being stored in the cavity of the protrusion. Therefore, some practical problems in the related art are effectively overcome, so that the disclosure exhibits high utilization value and use significance.

The above-mentioned embodiments only illustrate the principles and effects of the disclosure, but are not intended to limit the disclosure. A person having ordinary skill in the art can modify or change the abovementioned embodiments without departing from the spirit and scope of the disclosure. Therefore, all equivalent modifications or changes made by a person having ordinary skill in the art without departing from the spirit and technical ideas disclosed in the disclosure shall still be covered by the claims of the disclosure.

### List of Reference Numerals

10: electronic apparatus,
11: working portion,
100: secondary battery,
110: casing,
120: electrode assembly,
130: cover assembly,
131: cover body,
132: lower insulating member,
1321: protrusion,
1322: supporting portion,
133: upper insulating member,
134: sealing member,
135: pressure relief mechanism,
140: electrode lead-out member,
141: connecting plate,
1411: terminal connecting zone,
1412: tab connecting zone,
1413: transitional connecting zone,
1414: first recess,
1415: second recess,
142: electrode terminal,
1421: annular groove,
1422: annular boss,
143: first electrode lead-out member,
144: second electrode lead-out member.

## Claims

1. An electrode lead-out member (140), comprising:
a connecting plate (141) comprising a terminal connecting zone (1411), a tab connecting zone (1412), and a transitional connecting zone (1413) for connecting the terminal connecting zone (1411) and the tab connecting zone (1412); and
an electrode terminal (142) connected to the terminal connecting zone (1411),
wherein the transitional connecting zone (1413) is provided with at least one first recess (1414), the at least one first recess (1414) is recessed in a thickness direction of the connecting plate (141), and an inner contour of a sidewall of the at least one first recess (1414) is located inside an outer contour of a sidewall of the connecting plate (141).

2. The electrode lead-out member (140) according to claim 1, wherein a projection of the at least one first recess (1414) along the thickness direction is located outside the tab connecting zone (1412).

3. The electrode lead-out member (140) according to claim 1, wherein the at least one first recess (1414) is recessed in a first direction, and the first direction points from one side of the connecting plate (141) to which the electrode terminal (142) is connected towards the other side of the connecting plate (141).

4. The electrode lead-out member (140) according to claim 1, wherein a position of the connecting plate (141) extending in a second direction is provided with a second recess (1415), the second direction points from the terminal connecting zone (1411) towards the tab connecting zone (1412), the second recess (1415) is recessed in the thickness direction of the connecting plate (141), and a fuse portion is formed between the second recess (1415) and the at least one first recess (1414).

5. The electrode lead-out member (140) according to claim 4, wherein each transitional connecting zone (1413) on a side of the terminal connecting zone (1411) is provided with the at least one first recess (1414), the second recess (1415) is arranged at a position of the connecting plate (141) away from the terminal connecting zone (1411) between the at least one first recess (1414) on both sides, the at least one first recess (1414) has a polygonal prism structure, the second recess (1415) has a polygonal prism structure, a side of the second recess (1415) away from the terminal connecting zone (1411) penetrates through a side of the connecting plate (141), and the fuse portion is formed between corner vertex of the at least one first recess (1414) and the second recess (1415).

6. The electrode lead-out member (140) according to claim 5, wherein the at least one first recess (1414) is a through hole penetrating in the thickness direction of the connecting plate (141), the second recess (1415) is a through hole penetrating in the thickness direction of the connecting plate (141), a length of the fuse portion is C, a minimum distance between an outer contour of the at least one first recess (1414) and an outer contour of the connecting plate (141) is D, and a width of the connecting plate (141) where the tab connecting zone (1412) is located is A, then C+D < A.

7. The electrode lead-out member (140) according to claim 4, wherein the second recess (1415) is a through hole penetrating in the thickness direction of the connecting plate (141).

8. The electrode lead-out member (140) according to claim 1, wherein the material of the electrode terminal (142) is a metal containing aluminum, the material of the connecting plate (141) is a metal containing copper, and the electrode terminal (142) and the terminal connecting zone (1411) are connected by friction welding.

9. A cover assembly (130), comprising:
a cover body (131) provided with a through hole;
a lower insulating member (132) arranged on a side of the cover body (131); and
the lower insulating member (132) according to any one of claims 1 to 12, wherein the electrode terminal (142) of the electrode lead-out member (140) penetrates through the lower insulating member (132) and is at least partially arranged in the through hole, and at least part of the connecting plate (141) of the electrode lead-out member (140) abuts against a side of the lower insulating member (132) away from the cover body (131).

10. The cover assembly (130) according to claim 9, wherein a protrusion (1321) matched with the at least one first recess (1414) of the electrode lead-out member (140) is provided on a side of the lower insulating member (132) facing the connecting plate (141), and the protrusion (1321) is embedded and matched with the at least one first recess (1414).

11. The cover assembly (130) according to claim 9, wherein each terminal connecting zone (1411) on a side of the transitional connecting zone (1413) is provided with the at least one first recess (1414).

12. The cover assembly (130) according to claim 10, wherein the protrusion (1321) is a groove on a side facing the cover body (131).

13. The cover assembly (130) according to claim 12, wherein the protrusion (1321) comprises a bottom portion and a side portion, the side portion is connected to the lower insulating member (132) and extends in a direction away from the cover body (131), the bottom portion is connected to a side of the side portion away from the cover body (131), and the bottom portion and/or the side portion is provided with a liquid-guiding hole.

14. The cover assembly (130) according to claim 9, wherein the cover assembly (130) comprises a first electrode lead-out member (143) and a second electrode lead-out member (144), a first recess (1414) of the connecting plate (141) of the first electrode lead-out member (143) and a first recess (1414) of the connecting plate (141) of the second electrode lead-out member (144) are not interchangeable.

15. The cover assembly (130) according to claim 14, wherein the first recess (1414) of the first electrode lead-out member (143) is arranged at a first position of the connecting plate (141), the first recess (1414) of the second electrode lead-out member (144) is arranged at a second position of the connecting plate (141), and the first position and the second position are located at different positions of the transitional connecting zones (1413).
